# EUROPEAN PATENT APPLICATION

(11) **EP 4 807 828 A1**
(43) Date of publication of application: **16.09.2026**
(21) Application number: 24923224.0
(22) Date of filing: 30.07.2024
(51) Int. Cl.: H01M 10/04

(54) **BATTERY CELL WINDING MANDREL DEVICE AND BATTERY CELL WINDING APPARATUS**

(30) Priority: 05.02.2024 CN 202410167346
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: HUANG, Guoda, Ningde, Fujian 352100 (CN); WANG, Yiruo, Ningde, Fujian 352100 (CN); HUANG, Jinghua, Ningde, Fujian 352100 (CN); PENG, Feng, Ningde, Fujian 352100 (CN)
(74) Representative: Lorenz Seidler Gossel Part. mbB
(86) International application number: PCT/CN2024/108609
(87) International publication number: WO 2025/167009

(57) **Abstract**

Disclosed in the present application are a battery cell winding mandrel device and a battery cell winding apparatus. The battery cell winding mandrel device comprises: a mounting base (10); an assembly housing (20), which is provided with a first end (21) and a second end (22), the first end (21) being fixedly mounted on the mounting base (10), and the second end (22) being a free end; at least one transmission assembly (30) mounted on the assembly housing (20), each transmission assembly (30) comprising a plurality of transmission components (31), the plurality of transmission components (31) being arranged around the axis of the assembly housing (20); and a plurality of suction shells (40) connected to the corresponding transmission components (31) on a one-to-one basis, the plurality of suction shells (40) being combined to form a cylindrical structure, and the transmission components (31) driving the suction shells (40) to move in the direction perpendicular to the axis of the assembly housing (20), thus expanding or reducing the outer diameter of the cylindrical structure. The application of the present technical solution aims to solve the problem of the difficulty in unloading a bare battery cell from a battery cell winding mandrel device.

## Description

This application claims priority to Chinese Patent Application No. 2024101673464, filed with the China National Intellectual Property Administration on February 5, 2024, and entitled "CELL WINDING NEEDLE APPARATUS AND CELL WINDING DEVICE", which is incorporated herein by reference in its entirety.

### TECHNICAL FIELD

This application belongs to the technical field of battery manufacturing equipment, and in particular relates to a cell winding needle apparatus and a cell winding device.

### BACKGROUND

In the production process of batteries, a positive electrode sheet, a negative electrode sheet, and an insulating separator need to be wound and formed into a jelly roll, and then the production step of assembling the jelly roll into a battery housing is performed.

In the related art, a cell winding needle apparatus is used, and according to the lamination sequence of a first insulating separator, a positive electrode sheet, a second insulating separator, and a negative electrode sheet, the ends of the first insulating separator, the positive electrode sheet, the second insulating separator, and the negative electrode sheet are respectively stacked and fixed to the cell winding needle apparatus. Then, the cell winding needle apparatus rotates, thereby winding and forming the jelly roll.

After the cell winding needle apparatus performs winding to form the jelly roll, the jelly roll is wound on the cell winding needle apparatus, so the jelly roll needs to be unloaded from the cell winding needle apparatus. Since there is a hoop stress on the cell winding needle apparatus when the jelly roll is wound, it is relatively difficult to unload the jelly roll from the cell winding needle apparatus, which affects the production efficiency of the battery.

### SUMMARY

A purpose of the embodiments of this application is to provide a cell winding needle apparatus and a cell winding device, solving the problems, which include, but are not limited to, the difficulty of unloading the jelly roll from the cell winding needle apparatus.

The technical solution adopted by the embodiments of this application is as follows.

According to a first aspect of this application, a cell winding needle apparatus is provided, including:
a mounting base;
an assembly housing, where the assembly housing is provided with a first end and a second end, the first end is fixedly mounted to the mounting base, and the second end is a free end;
at least one set of transmission assembly, mounted to the assembly housing, where the transmission assembly includes a plurality of transmission members, and the plurality of transmission members are arranged around an axis of the assembly housing; and
a plurality of adsorption housings, connected to the respective transmission members in a one-to-one correspondence, where the plurality of adsorption housings are combined to form a cylindrical structure, and the transmission members drive the adsorption housings to move along a radial direction of the assembly housing, so as to increase or reduce an outer diameter of the cylindrical structure.

In the process of winding and forming a jelly roll using the cell winding needle apparatus provided by the design of this application, before winding of the positive electrode sheet, the negative electrode sheet, and the separator, the transmission members of the transmission assembly drive the respective adsorption housings to move outward to expand to an inner diameter required for the jelly roll, the respective adsorption housings are fixed, and winding and forming are performed to obtain the jelly roll. The jelly roll is wound on the adsorption housings of the cell winding needle apparatus, and then the transmission members of the transmission assembly drive the respective adsorption housings to move to reduce the outer diameter of the cylindrical structure, thereby loosening the jelly roll and the adsorption housings from each other. Then the jelly roll can be easily and quickly unloaded from the free end of the cell winding needle apparatus, which reduces the difficulty of unloading the jelly roll from the cell winding needle apparatus, improving the unloading efficiency of unloading the jelly roll from the cell winding needle apparatus, thereby improving the production efficiency of new energy batteries.

In some embodiments of this application, the transmission assembly further includes a push rod member, the assembly housing is hollow, the push rod member is slidably mounted in the assembly housing, the push rod member is drivingly connected to each of the transmission members, and the push rod member slides along an axial direction of the assembly housing to drive the transmission members. The push rod member simultaneously controls the respective transmission members to move together, so as to increase or reduce the outer diameter of the cylindrical structure including the respective adsorption housings, and the driving process is simple and quick.

In some embodiments of this application, each set of transmission assembly includes two transmission members, the transmission member has a first connection end and a second connection end, the first connection end is connected to the push rod member, the adsorption housings are connected to the two second connection ends in a one-to-one correspondence, a direction of the transmission member from the first connection end to the second connection end is perpendicular to the axial direction of the assembly housing, and a direction of one of the transmission members from the first connection end to the second connection end is opposite to a direction of the other transmission member from the first connection end to the second connection end. The push rod member simultaneously controls the two transmission members to move together, so as to increase or reduce the outer diameter of the cylindrical structure including the two adsorption housings, and the driving process is simple and quick.

In some embodiments of this application, the push rod member includes a push rod body and a drive shaft structure mounted to the push rod body, the push rod body is slidably mounted in the assembly housing, and an axis of the drive shaft structure is perpendicular to an axis of the push rod body. Further, the assembly housing is provided with a first assembly hole, the first connection end is provided with a second assembly hole, an extension direction of the second assembly hole is inclined relative to the axial direction of the assembly housing, the drive shaft structure sequentially passes through the first assembly hole and the second assembly hole, the push rod body slides to drive the drive shaft structure to slide in the first assembly hole and the second assembly hole, and an inclination direction of the second assembly hole of one of the transmission members is opposite to an inclination direction of the second assembly hole of the other transmission member. Relative sliding of the drive shaft structure in the second assembly hole drives the transmission member to move, thereby increasing or reducing the outer diameter of the cylindrical structure including the two adsorption housings, and the driving process is simple and quick.

In some embodiments of this application, the drive shaft structure includes a pin shaft and a roller, the pin shaft is mounted to the push rod body, the roller is rotatably mounted to an end portion of the pin shaft, and the roller is located in the second assembly hole. The roller rolls relative to a strip-shaped flat hole wall of the second assembly hole, thereby reducing frictional resistance, so that the drive shaft structure can smoothly drive the transmission member to move.

In some embodiments of this application, an inclination degree of the extension direction of the second assembly hole relative to the axial direction of the assembly housing is between 1:20 and 1:5.

In some embodiments of this application, an outer side wall of the assembly housing is provided with a plurality of guide grooves, the first assembly hole is opened at a groove bottom of the guide groove, and the transmission member is slidably mounted to the guide groove. Two side groove walls of the guide groove restrict the transmission member, so that the transmission member cannot move along the axial direction of the assembly housing, and under the guiding function of the guide groove, the transmission member stably moves along the guide groove.

In some embodiments of this application, each transmission member includes a first section, a second section, and a third section that are sequentially connected, the first section and the third section are oppositely arranged, the first section and the third section are both provided with the second assembly hole, the first section and the third section are respectively located in two opposite guide grooves, and the second section is connected to the adsorption housing. The transmission member forming a U-shaped structure through the first section, the second section, and the third section helps to optimize the volume of the cell winding needle apparatus and achieve a miniaturized structural design.

In some embodiments of this application, the transmission assembly further includes a servo drive mechanism, the servo drive mechanism is mounted to the mounting base, and an output end of the servo drive mechanism is drivingly connected to one end of the push rod body close to the mounting base. The servo drive mechanism drives the push rod body, so that in the process of winding and forming the jelly roll, the outer diameter of the cylindrical structure including the two adsorption housings can be automatically adjusted, which reduces the work intensity of workers and helps to improve production efficiency.

In some embodiments of this application, the cell winding needle apparatus includes a plurality of sets of transmission assemblies, and two adjacent sets of transmission assemblies are spaced apart. The plurality of sets of transmission assemblies simultaneously drive the respective adsorption housings to move, so that the respective adsorption housings can more stably and quickly increase or reduce the size of the outer diameter of the cylindrical structure formed by them.

In some embodiments of this application, the adsorption housing is provided with an air cavity, the adsorption housing has an arc surface side wall and end side walls connected to both ends of the arc surface side wall, the arc surface side wall is provided with a first air hole, the end side wall of the adsorption housing close to the mounting base is provided with a second air hole, and both the first air hole and the second air hole communicate with the air cavity. Adsorption and fixation are performed by utilizing a vacuum adsorption principle, the operation is simple and quick, and the adsorption is stable, which helps to improve production efficiency.

In some embodiments of this application, the plurality of adsorption housings are in one-to-one correspondence, an air path integration mechanism is fixedly mounted to the end side wall of the adsorption housing close to the mounting base, the air path integration mechanism communicates with the air cavity, and the air path integration mechanism communicates with a vacuum pipeline. The air path integration mechanism performs auxiliary centralized vacuuming operation on the air cavity of the adsorption housing, which improves the evacuation efficiency of the vacuum pipeline on the air cavity of the adsorption housing.

In some embodiments of this application, the arc surface side wall of each adsorption housing is provided with an avoidance groove, and both ends of the avoidance groove respectively penetrate through the two end side walls, so that an unloading clamp arm can be smoothly inserted into an inner hole of the jelly roll, and the jelly roll can be quickly unloaded from the cell winding needle apparatus to complete unloading.

According to a second aspect of this application, a cell winding device is provided. Specifically, the cell winding device includes the cell winding needle apparatus as described above. In the process of winding and forming a jelly roll, before winding of the positive electrode sheet, the negative electrode sheet, the first insulating separator, and the second insulating separator, the transmission members of the transmission assembly drive the respective adsorption housings to move outward to expand to an inner diameter required for the jelly roll, the respective adsorption housings are fixed, and winding and forming are performed to obtain the jelly roll. The jelly roll is wound on the adsorption housings of the cell winding needle apparatus, and then the transmission members of the transmission assembly drive the respective adsorption housings to move to reduce the outer diameter of the cylindrical structure, thereby eliminating the hoop stress between the jelly roll and the respective adsorption housings, meaning that the jelly roll and the adsorption housings are loosened from each other. Then the jelly roll can be easily and quickly unloaded from the free end of the cell winding needle apparatus, which reduces the difficulty of unloading the jelly roll from the cell winding needle apparatus, improving the unloading efficiency of unloading the jelly roll from the cell winding needle apparatus, thereby improving the production efficiency of new energy batteries.

In some embodiments of this application, the cell winding device further includes a slide rail, a bracket, and an unloading drive mechanism, the slide rail is mounted to a horizontal mounting surface, the bracket is slidably mounted to the slide rail, the unloading drive mechanism is mounted to the horizontal mounting surface, the unloading drive mechanism is drivingly connected to the bracket to drive the bracket to slide along the slide rail, and the mounting base is fixedly mounted to the bracket. After the jelly roll is wound and formed, and the transmission members drive the adsorption housings to move to reduce the outer diameter of the cylindrical structure including the adsorption housings, the unloading drive mechanism drives the bracket to slide along the slide rail, thereby quickly detaching the cell winding needle apparatus from the jelly roll to complete unloading.

### DESCRIPTION OF DRAWINGS

In order to more clearly illustrate the technical solutions in the embodiments of this application, the drawings required to be used in the embodiments or exemplary technical descriptions will be briefly introduced below. Obviously, the drawings in the following description are merely some embodiments of this application. For those of ordinary skill in the art, other drawings can also be obtained according to these drawings without creative effort.
FIG. 1 is a schematic structural diagram of winding a positive electrode sheet, a negative electrode sheet, a first insulating separator, and a second insulating separator by a cell winding needle apparatus in the related art;
FIG. 2 is a first schematic diagram of an assembled structure of a cell winding needle apparatus according to an embodiment of this application;
FIG. 3 is a second schematic diagram of an assembled structure of a cell winding needle apparatus according to an embodiment of this application;
FIG. 4 is a front view schematic of the cell winding needle apparatus shown in FIG. 3 along direction S;
FIG. 5 is a schematic diagram of an assembled structure of a transmission assembly and a mounting base of a cell winding needle apparatus according to an embodiment of this application;
FIG. 6 is an exploded schematic diagram of FIG. 5;
FIG. 7 is an enlarged schematic diagram of position A in FIG. 6;
FIG. 8 is a first schematic structural diagram of an adsorption housing of a cell winding needle apparatus according to an embodiment of this application; and
FIG. 9 is a second schematic structural diagram of an adsorption housing of a cell winding needle apparatus according to an embodiment of this application.

Reference numerals in the figures:
1. existing cell winding needle apparatus; 2. first insulating separator; 3. positive electrode sheet; 4. second insulating separator; 5. negative electrode sheet;
10. mounting base;
20. assembly housing; 21. first end; 22. second end; 23. first assembly hole; 24. guide groove;
30. transmission assembly; 31. transmission member; 311. first connection end; 3111. second assembly hole; 312. second connection end; 313. first section; 314. second section; 315. third section; 32. push rod member; 321. push rod body; 322. drive shaft structure; 3221. pin shaft; 3222. roller;
40. adsorption housing; 41. arc surface side wall; 411. first air hole; 412. avoidance groove; 42. end side wall; 421. second air hole; 43. housing bottom; 431. accommodating groove;
50. air path integration mechanism; and
60. vacuum pipeline.

### DESCRIPTION OF EMBODIMENTS

In order to make the purpose, technical solutions, and advantages of this application clearer, this application will be further described in detail below with reference to the drawings and embodiments. It should be understood that the specific embodiments described herein are only used to explain the present invention and are not used to limit this application.

It should be noted that when a component is referred to as being "fixed to" or "disposed on" another component, it can be directly on the another component or indirectly on the another component. When a component is referred to as being "connected to" another component, it can be directly or indirectly connected to the another component. The orientation or positional relationships indicated by the terms "upper", "lower", "left", "right", and the like are based on the orientation or positional relationships shown in the drawings, and are only for convenience of description, rather than indicating or implying that the referred means or element must have a specific orientation, be constructed and operated in a specific orientation, and therefore cannot be understood as a limitation on this application. For those of ordinary skill in the art, the specific meanings of the above terms can be understood according to specific situations. The terms "first" and "second" are only used for convenience of description and cannot be understood as indicating or implying relative importance or implicitly indicating the number of technical features. The meaning of "a plurality" is two or more, unless otherwise explicitly and specifically defined.

In order to illustrate the technical solutions provided by this application, detailed description is given below with reference to specific drawings and embodiments.

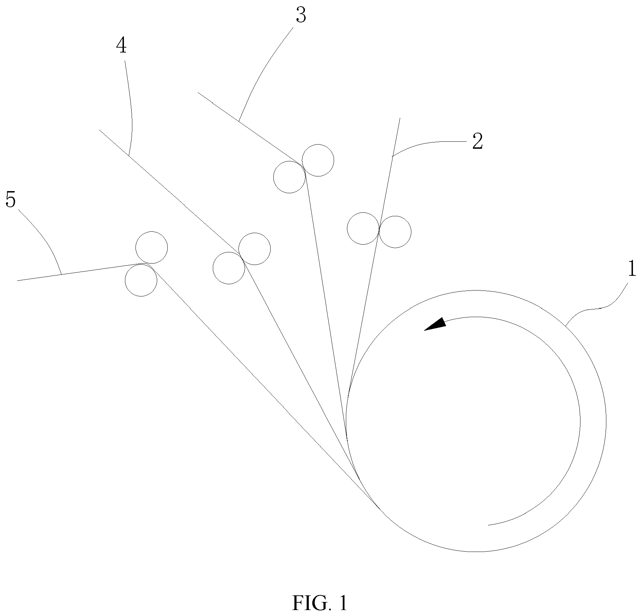

In the production process of new energy batteries, a positive electrode sheet, a negative electrode sheet, and an insulating separator need to be wound to form a jelly roll. In the related art, as shown in FIG. 1, a cell winding needle apparatus 1 is used to wind a positive electrode sheet 3, a negative electrode sheet 5, a first insulating separator 2, and a second insulating separator 4 into a jelly roll. As shown in FIG. 1, according to the lamination sequence of the first insulating separator 2, the positive electrode sheet 3, the second insulating separator 4, and the negative electrode sheet 5, workers respectively fix the ends of the first insulating separator 2, the positive electrode sheet 3, the second insulating separator 4, and the negative electrode sheet 5 to the cell winding needle apparatus 1, and then the cell winding needle apparatus 1 rotates to drive the first insulating separator 2, the positive electrode sheet 3, the second insulating separator 4, and the negative electrode sheet 5 to move, thereby winding and forming the jelly roll. Moreover, after the cell winding needle apparatus performs winding to form the jelly roll, the jelly roll is wound on the cell winding needle apparatus, so the jelly roll needs to be unloaded from the cell winding needle apparatus. However, in the process of winding and forming the jelly roll, the positive electrode sheet, the negative electrode sheet, and the insulating separator are wound circle by circle on the cell winding needle apparatus, so that the wound and formed jelly roll has a hoop stress on the cell winding needle apparatus. Due to the hoop stress of the jelly roll on the cell winding needle apparatus, workers need to find ways to overcome the hoop stress in order to unload the jelly roll from the cell winding needle apparatus to complete unloading. This makes it relatively difficult to unload the jelly roll from the cell winding needle apparatus, affects the unloading efficiency, and thus affects the production efficiency of new energy batteries.

Based on the above considerations, in order to conveniently and quickly unload the wound and formed jelly roll from the cell winding needle apparatus to quickly complete unloading, the embodiments of this application provide a newly designed cell winding needle apparatus, and a cell winding device is assembled using the cell winding needle apparatus for winding and forming a jelly roll. In the cell winding needle apparatus provided by the design of the embodiments of this application, the transmission members of the transmission assembly drive the respective adsorption housings to move to reduce the outer diameter of the cylindrical structure including the plurality of adsorption housings, thereby eliminating the hoop stress between the jelly roll and the respective adsorption housings, so that the jelly roll can be easily and quickly unloaded from the free end of the cell winding needle apparatus to complete unloading, which helps to improve the unloading efficiency of the jelly roll and correspondingly improve the production efficiency of new energy batteries.

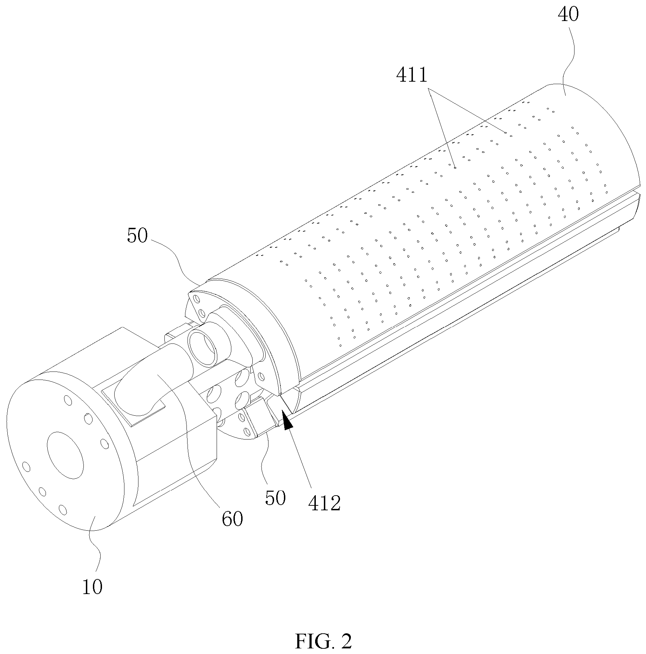

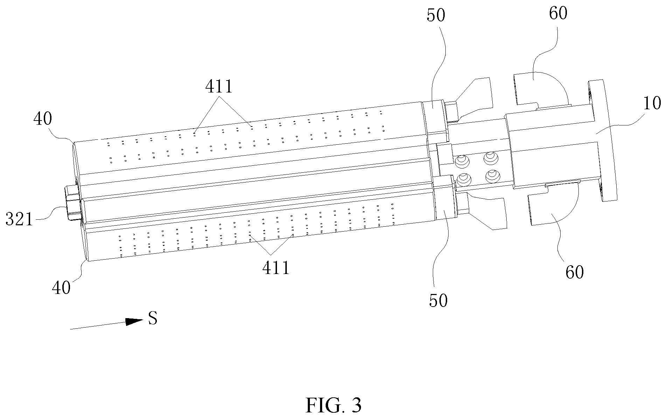

As shown in FIGs. 2 to 6, the cell winding needle apparatus provided by the design of the embodiments of this application includes a mounting base 10, an assembly housing 20, at least one set of transmission assembly 30, and a plurality of adsorption housings 40. In this embodiment, one set of transmission assembly 30 is taken as an example for description. The assembly housing 20 is provided with a first end 21 and a second end 22, the first end 21 is fixedly mounted to the mounting base 10, the second end 22 is a free end, the transmission assembly 30 is mounted to the assembly housing 20, the transmission assembly 30 includes a plurality of transmission members 31, the plurality of transmission members 31 are arranged around an axis of the assembly housing 20, the plurality of adsorption housings 40 are arranged in one-to-one correspondence with the plurality of transmission members 31, each adsorption housing 40 is connected to the corresponding transmission member 31, the plurality of adsorption housings 40 are combined to form a cylindrical structure, and the transmission members 31 drive the adsorption housings 40 to move in a direction perpendicular to the axis of the assembly housing 20, so as to increase or reduce an outer diameter of the cylindrical structure.

The mounting base 10 serves as a support body for providing support function for the entire cell winding needle apparatus. The first end 21 of the assembly housing 20 is fixedly mounted to the mounting base 10 by bolt connection (or the first end 21 can also be fixedly connected to the mounting base 10 by welding), and the second end 22 of the assembly housing 20 is the free end of the cell winding needle apparatus. Moreover, the transmission members 31 can drive the adsorption housings 40 to move in a direction perpendicular to the axis of the assembly housing 20, meaning that the transmission members 31 drive the adsorption housings 40 to move along a radial direction of the assembly housing 20.

In the process of winding and forming a jelly roll using the cell winding needle apparatus provided by the design of this application, before winding of the positive electrode sheet 3, the negative electrode sheet 5, the first insulating separator 2, and the second insulating separator 4, the transmission members 31 of the transmission assembly 30 drive the respective adsorption housings 40 to move outward to expand to an inner diameter required for the jelly roll, the respective adsorption housings 40 are fixed, and winding and forming are performed to obtain the jelly roll. The jelly roll is wound on the adsorption housings 40 of the cell winding needle apparatus, and then the transmission members 31 of the transmission assembly 30 drive the respective adsorption housings 40 to move to reduce the outer diameter of the cylindrical structure, thereby eliminating the hoop stress between the jelly roll and the respective adsorption housings 40, meaning that the jelly roll and the respective adsorption housings 40 are separated from each other. Then, the jelly roll can be easily and quickly unloaded from the free end of the cell winding needle apparatus, which reduces the difficulty of unloading the jelly roll from the cell winding needle apparatus, improving the unloading efficiency of unloading the jelly roll from the cell winding needle apparatus, thereby improving the production efficiency of new energy batteries.

Moreover, in the embodiments of this application, the respective adsorption housings 40 fix the first insulating separator 2 covering the adsorption housings 40 by adsorption (in the embodiments of this application, the jelly roll is formed by stacking and winding in the lamination sequence of the first insulating separator 2, the positive electrode sheet 3, the second insulating separator 4, and the negative electrode sheet 5; certainly, other lamination sequences can also be used, which is not limited herein), and then winding operation is performed. After winding and forming of the jelly roll, adsorption of the first insulating separator 2 is stopped, and the outer diameter of the cylindrical structure is reduced, so that the respective adsorption housings 40 can be detached from the jelly roll, the operation is convenient and effective, and it helps to improve the production efficiency of new energy batteries.

In some embodiments of this application, when the incoming material wound on the cell winding needle apparatus is a composite incoming material that has been composited, the transmission members 31 of the transmission assembly 30 drive the respective adsorption housings 40 to move to reduce the outer diameter of the cylindrical structure, thereby conveniently and quickly achieving misalignment adjustment of adjacent tabs during the winding process (relative misalignment between tabs on different winding layers and tabs on adjacent layers).

The composite incoming material refers to that before the winding process of winding and forming a jelly roll using the cell winding needle apparatus, the first insulating separator 2, the positive electrode sheet 3, the second insulating separator 4, and the negative electrode sheet 5 are stacked and composited together, thereby forming an integral composite incoming material.

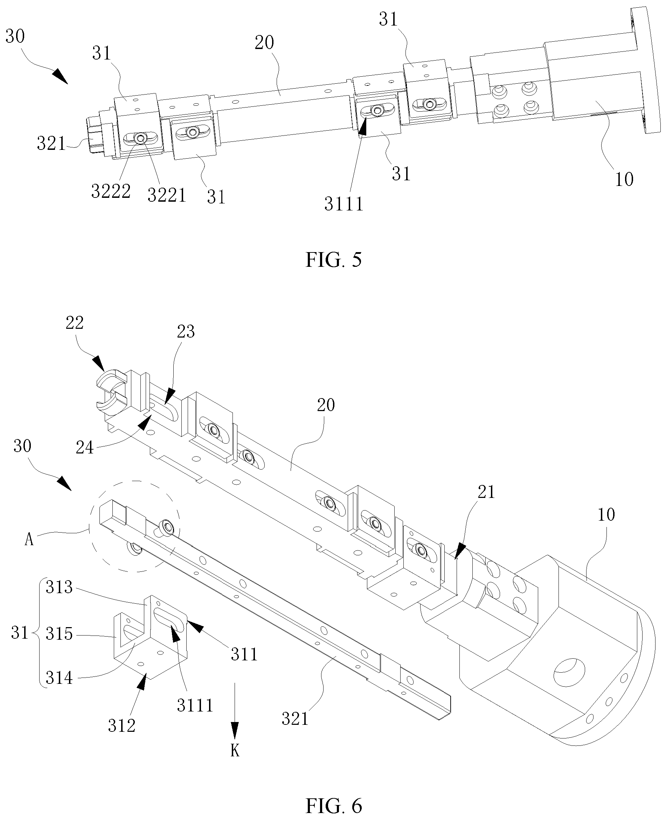

As shown in FIGs. 5 to 7, in some embodiments of this application, the transmission assembly 30 further includes a push rod member 32, the assembly housing 20 is hollow, and the push rod member 32 is slidably mounted in the assembly housing 20. Moreover, the push rod member 32 is drivingly connected to each of the transmission members 31, and the push rod member 32 slides along the axial direction of the assembly housing 20 to drive the transmission members 31 to move in a direction perpendicular to the axis of the assembly housing 20, thereby driving the adsorption housings 40 to move in a direction perpendicular to the axis of the assembly housing 20, so as to increase or reduce the outer diameter of the cylindrical structure. In this way, the outer diameter of the cylindrical structure formed by the adsorption housings 40 can be conveniently adjusted according to the actual required inner diameter of the jelly roll. In this embodiment, the push rod member 32 simultaneously controls the respective transmission members 31 to move together, so as to increase or reduce the outer diameter of the cylindrical structure including the respective adsorption housings 40, and the driving process is simple and quick.

In some embodiments of this application, as shown in FIGs. 5 and 6, each set of transmission assembly 30 includes two transmission members 31, and the transmission member 31 has a first connection end 311 and a second connection end 312. Correspondingly, the number of adsorption housings 40 in the cell winding needle apparatus is two, and the two adsorption housings 40 are oppositely combined to form a cylindrical structure. During assembly, the two first connection ends 311 of the two transmission members 31 are each connected to the push rod member 32, the two adsorption housings 40 are respectively connected to the two second connection ends 312 of the two transmission members 31, a direction of the transmission member 31 from the first connection end 311 to the second connection end 312 is perpendicular to the axial direction of the assembly housing 20, and a direction of one of the transmission members 31 from the first connection end 311 to the second connection end 312 is opposite to a direction of the other transmission member 31 from the first connection end 311 to the second connection end 312 (the direction from the first connection end 311 to the second connection end 312 is a direction indicated by arrow K in FIG. 6). In other words, when the push rod member 32 moves along its axial direction, the push rod member 32 drives the transmission members 31 to move in the direction from the first connection end 311 to the second connection end 312, thereby driving the adsorption housings 40 to move in a direction perpendicular to the axis of the assembly housing 20, so as to increase or reduce the outer diameter of the cylindrical structure. In this embodiment, the push rod member 32 simultaneously controls the two transmission members 31 to move together, so as to increase or reduce the outer diameter of the cylindrical structure including the two adsorption housings 40, and the driving process is simple and quick.

In some embodiments, each set of transmission assembly 30 corresponds to two adsorption housings 40, then a plurality of sets of transmission assemblies 30 correspond to a plurality of adsorption housings 40. For example, two sets of transmission assemblies 30 correspond to four adsorption housings 40, and so forth; the plurality of adsorption housings 40 are circumferentially combined to form a cylindrical structure.

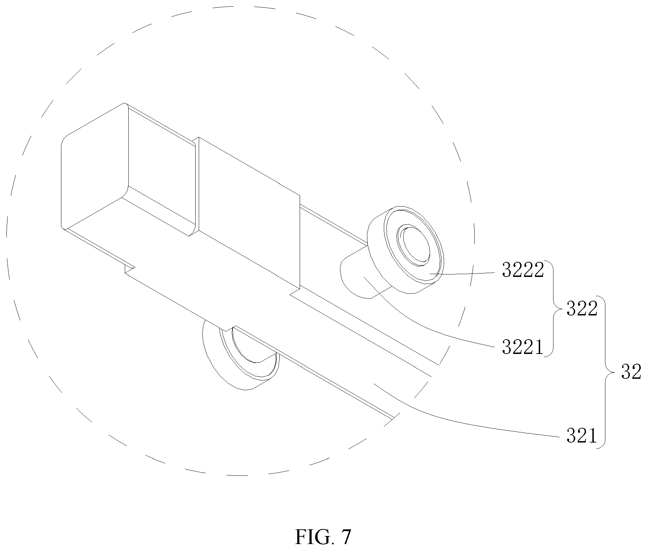

In some embodiments of this application, as shown in FIGs. 6 and 7, the push rod member 32 includes a push rod body 321 and a drive shaft structure 322 mounted to the push rod body 321, the push rod body 321 is slidably mounted in the assembly housing 20, and an axis of the drive shaft structure 322 is perpendicular to an axis of the push rod body 321. Moreover, the assembly housing 20 is provided with a first assembly hole 23, the first connection end 311 is provided with a second assembly hole 3111, and an extension direction of the second assembly hole 3111 is inclined relative to the axial direction of the assembly housing 20. It should be noted that the extension direction of the second assembly hole 3111 is perpendicular to the axial direction of the drive shaft structure 322. In other words, the second assembly hole 3111 is strip-shaped in its extension direction, that is, the direction of the maximum dimension of the second assembly hole 3111. Correspondingly, the first assembly hole 23 is also strip-shaped, and an extension direction of the first assembly hole 23 is parallel to the axial direction of the assembly housing 20. The drive shaft structure 322 sequentially passes through the first assembly hole 23 and the second assembly hole 3111, the push rod body 321 slides to drive the drive shaft structure 322 to slide in the first assembly hole 23 and the second assembly hole 3111, and since the extension direction of the second assembly hole 3111 is inclined relative to the axial direction of the assembly housing 20, the drive shaft structure 322 drives the transmission member 31 to move in the direction from the first connection end 311 to the second connection end 312, thereby driving the adsorption housing 40 to move in a direction perpendicular to the axis of the assembly housing 20, so as to increase or reduce the outer diameter of the cylindrical structure. Moreover, an inclination direction of the second assembly hole 3111 of one of the transmission members 31 is opposite to an inclination direction of the second assembly hole 3111 of the other transmission member 31. Therefore, the two transmission members 31 respectively drive the corresponding adsorption housings 40 to move toward each other to reduce the outer diameter of the cylindrical structure including the two adsorption housings 40; or the two transmission members 31 respectively drive the corresponding adsorption housings 40 to move away from each other to increase the outer diameter of the cylindrical structure including the two adsorption housings 40. In this embodiment, relative sliding of the drive shaft structure 322 in the second assembly hole 3111 drives the transmission member 31 to move, thereby increasing or reducing the outer diameter of the cylindrical structure including the two adsorption housings 40, and the driving process is simple and quick.

In some embodiments of this application, as shown in FIG. 7, the drive shaft structure 322 includes a pin shaft 3221 and a roller 3222, the pin shaft 3221 is fixedly mounted to the push rod body 321, the roller 3222 is rotatably mounted to an end portion of the pin shaft 3221, and the roller 3222 is located in the second assembly hole 3111. When the push rod body 321 moves along the axial direction of the assembly housing 20, the pin shaft 3221 synchronously moves in the first assembly hole 23 with the push rod body 321, the roller 3222 relatively moves in the second assembly hole 3111, and the roller 3222 rolls relative to a strip-shaped flat hole wall of the second assembly hole 3111, thereby reducing frictional resistance, so that the drive shaft structure 322 can smoothly drive the transmission member 31 to move, so as to increase the outer diameter of the cylindrical structure including the two adsorption housings 40.

In some embodiments of this application, an inclination degree of the extension direction of the second assembly hole 3111 relative to the axial direction of the assembly housing 20 is between 1:20 and 1:5, for example: the inclination degree can be 1:20, 1:15, 1:10, or 1:5. In this way, the movement distance of each transmission member 31 in the direction from the first connection end 311 to the second connection end 312 can be calculated based on the movement distance of the push rod body 321 along the axial direction of the assembly housing 20, thereby obtaining the size by which the outer diameter of the cylindrical structure including the two adsorption housings 40 is increased or reduced. The inclination degree refers to the degree of inclination or tilt of an object or inclined surface, usually expressed by the tangent function value of the included angle between the object or inclined surface and a reference object. In this embodiment, the inclination degree of the extension direction of the second assembly hole 3111 relative to the axial direction of the assembly housing 20 is a ratio of the movement distance of the adsorption housing 40 along the radial direction of the assembly housing 20 to the movement distance of the push rod body 321 along the axial direction of the assembly housing 20. The calculation process is: assuming that the movement distance of the push rod body 321 along the axial direction of the assembly housing 20 is *x*₁, and assuming that the outer diameter of the cylindrical structure including the two adsorption housings 40 is increased or reduced by *x*₂, and the inclination degree is 1:5, then $\frac{{x}_{2} / 2}{{x}_{1}} = \frac{1}{5}$, where *x*₁ is a specific distance value obtained by actual measurement, thereby calculating *x*₂.

In some embodiments of this application, each transmission member 31 can also be powered by a corresponding motor, the motor is fixed in the assembly housing 20, and a transmission structure is provided between the motor and the transmission member 31, for example, the transmission structure includes but is not limited to a rack and pinion structure, and a lead screw and nut pair structure. In this way, the motor outputs power and drives the transmission member 31 to move through the transmission structure, so as to increase the outer diameter of the cylindrical structure including the two adsorption housings 40.

In some other embodiments of this application, each transmission member 31 can also be powered by a corresponding cylinder or oil cylinder. The piston rod of the cylinder or oil cylinder extends and retracts, thereby directly driving the transmission member 31 to move, so as to increase the outer diameter of the cylindrical structure including the two adsorption housings 40.

In still some other embodiments of this application, the module for providing power to the respective transmission members 31 can also be including a motor, a driving gear, a driven gear, and a transmission toothed belt wound around the driving gear and the driven gear. During assembly, a rotating shaft of the battery is drivingly connected to the driving gear, and the motor is fixed in the assembly housing 20. Both the driving gear and the driven gear are mounted in the assembly housing 20, and the driving gear and the driven gear are spaced apart. The transmission member 31 is fixedly connected to the transmission toothed belt, and a connection position of the transmission toothed belt and the transmission member 31 is located between the driving gear and the driven gear. In this way, the motor drives the driving gear to rotate, thereby driving the transmission toothed belt to move, and then the transmission member 31 synchronously moves with the transmission toothed belt, so as to increase the outer diameter of the cylindrical structure including the two adsorption housings 40.

As shown in FIG. 6, an outer side wall of the assembly housing 20 is provided with a plurality of guide grooves 24, the first assembly hole 23 is opened at a groove bottom of the guide groove 24, and the transmission member 31 is slidably mounted to the guide groove 24. When the push rod body 321 moves along the axial direction of the assembly housing 20, the roller 3222 relatively moves in the second assembly hole 3111. At this time, two side groove walls of the guide groove 24 restrict the transmission member 31, so that the transmission member 31 cannot move along the axial direction of the assembly housing 20, and under the guiding function of the guide groove 24, the transmission member 31 moves along the guide groove 24 (that is, drives the transmission member 31 to move in the direction from the first connection end 311 to the second connection end 312), so that the transmission member 31 stably moves, thereby driving the adsorption housing 40 to stably move in a direction perpendicular to the axis of the assembly housing 20, so as to increase or reduce the outer diameter of the cylindrical structure.

In some embodiments of this application, as shown in FIG. 6, each transmission member 31 includes a first section 313, a second section 314, and a third section 315 that are sequentially connected, and the first section 313 and the third section 315 are oppositely arranged, meaning that the transmission member 31 forms a U-shaped structure through the first section 313, the second section 314, and the third section 315. The assembly housing 20 is located between the first section 313 and the third section 315, which helps to optimize the volume of the cell winding needle apparatus and achieve a miniaturized structural design. The first section 313 and the third section 315 are both provided with the second assembly hole 3111, the first section 313 and the third section 315 are respectively located in two opposite guide grooves 24, and the second section 314 is fixedly connected to the adsorption housing 40 by bolts.

In some embodiments of this application, the transmission assembly 30 further includes a servo drive mechanism (not shown in the figure). Specifically, the servo drive mechanism is fixedly mounted to the mounting base 10, an output end of the servo drive mechanism is drivingly connected to one end of the push rod body 321 close to the mounting base 10, and the output end of the servo drive mechanism drives the push rod body 321 to reciprocate along the axial direction of the assembly housing 20. Then, the two transmission members 31 respectively drive the corresponding adsorption housings 40 to move toward each other to reduce the outer diameter of the cylindrical structure including the two adsorption housings 40, or the two transmission members 31 respectively drive the corresponding adsorption housings 40 to move away from each other to increase the outer diameter of the cylindrical structure including the two adsorption housings 40. The servo drive mechanism drives the push rod body 321, so that in the process of winding and forming the jelly roll, the outer diameter of the cylindrical structure including the two adsorption housings 40 can be automatically adjusted, which reduces the work intensity of workers and helps to improve production efficiency.

In some embodiments of this application, as shown in FIGs. 5 and 6, the cell winding needle apparatus includes a plurality of sets of transmission assemblies 30, and two adjacent sets of transmission assemblies 30 are spaced apart along the axial direction of the assembly housing 20. The plurality of sets of transmission assemblies 30 simultaneously drive the respective adsorption housings 40 to move, so that the respective adsorption housings 40 can more stably and quickly increase or reduce the outer diameter of the cylindrical structure formed by them. In this embodiment, the cell winding needle apparatus is provided with two spaced sets of transmission assemblies 30, and each set of transmission assembly 30 includes two transmission members 31, as shown in FIGs. 5 and 6.

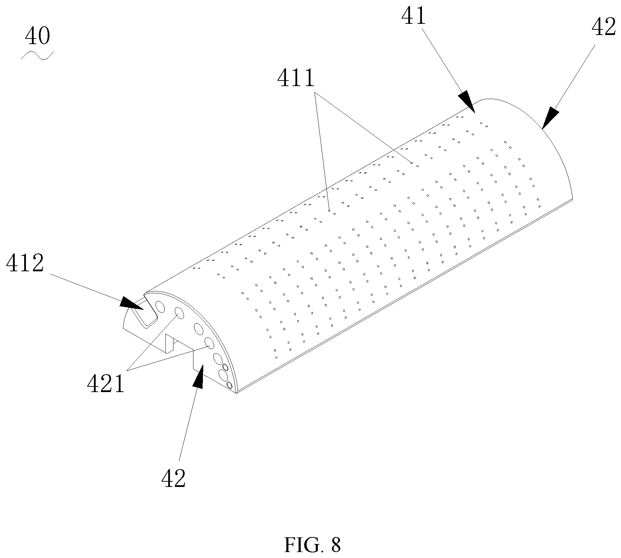

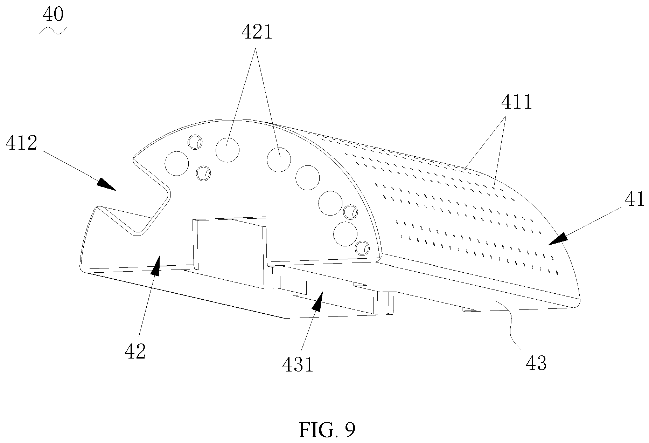

In some embodiments of this application, each adsorption housing 40 is formed with an air cavity. Moreover, as shown in FIGs. 8 and 9, each adsorption housing 40 has an arc surface side wall 41 and end side walls 42 connected to both ends of the arc surface side wall 41, the arc surface side wall 41 is provided with a first air hole 411, the end side wall of the adsorption housing 40 close to the mounting base 10 is provided with a second air hole 421, both the first air hole 411 and the second air hole 421 communicate with the air cavity, and the second air hole 421 communicates with a vacuum pipeline 60. In the process of winding and forming a jelly roll, evacuation is performed through the vacuum pipeline 60, thereby forming a negative pressure in the air cavity of the adsorption housing 40 relative to external atmospheric pressure, the first insulating separator 2 covering the first air hole 411 of the adsorption housing 40 is adsorbed and fixed, and winding operation is performed. In this embodiment, the first insulating separator 2 is adsorbed and fixed by utilizing a vacuum adsorption principle, the operation is simple and quick, and the adsorption is stable, which helps to improve production efficiency.

In some embodiments of this application, each adsorption housing 40 further has a housing bottom 43, and the housing bottom 43, the arc surface side wall 41, and the two end side walls 42 are combined to form the adsorption housing 40. As shown in FIG. 9, the housing bottom 43 is provided with an accommodating groove 431, and the accommodating groove 431 is used to accommodate the assembly housing 20. Therefore, when the outer diameter of the cylindrical structure including the two adsorption housings 40 is the smallest, the housing bottoms 43 of the two adsorption housings 40 are in contact, and the assembly housing 20 is accommodated in the two accommodating grooves 431 of the two adsorption housings 40.

In some embodiments of this application, in order to improve the evacuation efficiency of the vacuum pipeline 60 in the air cavity of the adsorption housing 40, as shown in FIGs. 2 to 4, the cell winding needle apparatus further includes a plurality of air path integration mechanisms 50. The plurality of air path integration mechanisms 50 are in one-to-one correspondence with the plurality of adsorption housings 40, the air path integration mechanism 50 is fixedly mounted to the end side wall of the adsorption housing 40 close to the mounting base 10, the air path integration mechanism 50 communicates with the air cavity through a plurality of second air holes 421, and the air path integration mechanism 50 communicates with the vacuum pipeline 60. The air path integration mechanism performs auxiliary centralized vacuuming operation in the air cavity of the adsorption housing 40, which improves the evacuation efficiency of the vacuum pipeline 60 in the air cavity of the adsorption housing 40.

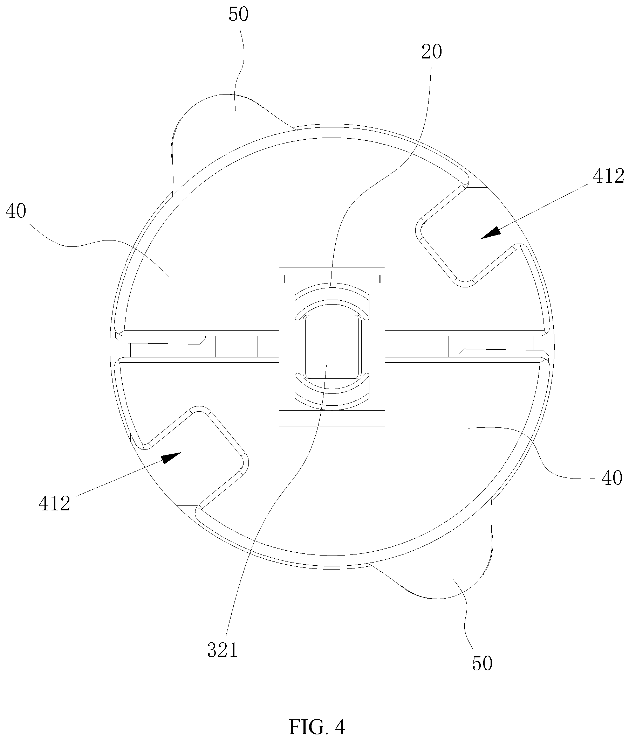

As shown in FIGs. 4, 8, and 9, the arc surface side wall 41 of each adsorption housing 40 is provided with an avoidance groove 412, and both ends of the avoidance groove 412 respectively penetrate through the two end side walls 42. The avoidance groove 412 is used to accommodate an unloading clamp arm, the unloading clamp arm can be smoothly inserted into an inner hole of the jelly roll, and the unloading clamp arm supports the jelly roll, so that the jelly roll can be quickly unloaded from the cell winding needle apparatus to complete unloading.

According to another aspect of this application, a cell winding device is designed and provided. Specifically, the cell winding device includes the aforementioned cell winding needle apparatus. In the process of winding and forming a jelly roll, before winding of the positive electrode sheet 3, the negative electrode sheet 5, the first insulating separator 2, and the second insulating separator 4, the transmission members 31 of the transmission assembly 30 drive the respective adsorption housings 40 to move outward to expand to an inner diameter required for the jelly roll, the respective adsorption housings 40 are fixed, and winding and forming are performed to obtain the jelly roll. The jelly roll is wound on the adsorption housings 40 of the cell winding needle apparatus, and then the transmission members 31 of the transmission assembly 30 drive the respective adsorption housings 40 to move to reduce the outer diameter of the cylindrical structure, thereby eliminating the hoop stress between the jelly roll and the respective adsorption housings 40, meaning that the jelly roll loosens the respective adsorption housings 40. Then, the jelly roll can be easily and quickly unloaded from the free end of the cell winding needle apparatus, improving the unloading efficiency of unloading the jelly roll from the cell winding needle apparatus, thereby improving the production efficiency of new energy batteries.

In some embodiments of this application, the cell winding device provided by the design of this application further includes a slide rail, a bracket, and an unloading drive mechanism, the slide rail is mounted to a horizontal mounting surface (typically, the horizontal mounting surface is the ground of a production workshop), the bracket is slidably mounted to the slide rail, the unloading drive mechanism is mounted to the horizontal mounting surface, the unloading drive mechanism is drivingly connected to the bracket to drive the bracket to slide along the slide rail, and the mounting base 10 is fixedly mounted to the bracket. After winding and forming of the jelly roll, the unloading clamp arm is inserted into the inner hole of the jelly roll along the avoidance groove 412, and then the transmission members 31 drive the adsorption housings 40 to move to reduce the outer diameter of the cylindrical structure including the adsorption housings 40. Then the unloading drive mechanism drives the bracket to slide along the slide rail, thereby driving the cell winding needle apparatus to move together, so that the cell winding needle apparatus quickly detaches from the jelly roll, meaning that the jelly roll quickly exits from the free end of the cell winding needle apparatus relative to the cell winding needle apparatus, completing unloading. Then, the unloading clamp arm transports the jelly roll to the next production station for corresponding processing operations, for example, a jelly roll clamping and forming station for clamping and forming the jelly roll (a processing station arranged after the winding processing station in the square battery production process), or a tab trimming station for trimming tabs (a processing station arranged after the winding processing station in the cylindrical battery production process).

The above are only optional embodiments of this application and are not used to limit this application. For those skilled in the art, this application can have various modifications and changes. Any modification, equivalent replacement, improvement, and the like made within the spirit and principle of this application shall be included in the scope of the claims of this application.

## Claims

1. A cell winding needle apparatus, **characterized by** comprising:
a mounting base;
an assembly housing, wherein the assembly housing is provided with a first end and a second end, the first end is fixedly mounted to the mounting base, and the second end is a free end;
at least one set of transmission assembly, mounted to the assembly housing, wherein the transmission assembly comprises a plurality of transmission members, and the plurality of transmission members are arranged around an axis of the assembly housing; and
a plurality of adsorption housings, connected to the respective transmission members in a one-to-one correspondence, wherein the plurality of adsorption housings are combined to form a cylindrical structure, and the transmission members drive the adsorption housings to move along a radial direction of the assembly housing, so as to increase or reduce an outer diameter of the cylindrical structure.

2. The cell winding needle apparatus according to claim 1, **characterized in that**:
the transmission assembly further comprises a push rod member, the assembly housing is hollow, the push rod member is slidably mounted in the assembly housing, the push rod member is drivingly connected to each of the transmission members, and the push rod member slides along an axial direction of the assembly housing to drive the transmission members.

3. The cell winding needle apparatus according to claim 2, **characterized in that**:
each set of the transmission assembly comprises two transmission members, the transmission member comprises a first connection end and a second connection end, the first connection end is connected to the push rod member, the adsorption housings are connected to the two second connection ends in a one-to-one correspondence, a direction of the transmission member from the first connection end to the second connection end is perpendicular to the axial direction of the assembly housing, and a direction of one of the transmission members from the first connection end to the second connection end is opposite to a direction of the other transmission member from the first connection end to the second connection end.

4. The cell winding needle apparatus according to claim 3, **characterized in that**:
the push rod member comprises a push rod body and a drive shaft structure mounted to the push rod body, the push rod body is slidably mounted in the assembly housing, and an axis of the drive shaft structure is perpendicular to an axis of the push rod body.

5. The cell winding needle apparatus according to claim 4, **characterized in that**:
the assembly housing is provided with a first assembly hole, the first connection end is provided with a second assembly hole, an extension direction of the second assembly hole is inclined relative to the axial direction of the assembly housing, the drive shaft structure sequentially passes through the first assembly hole and the second assembly hole, the push rod body slides to drive the drive shaft structure to slide in the first assembly hole and the second assembly hole, and an inclination direction of the second assembly hole of one of the transmission members is opposite to an inclination direction of the second assembly hole of the other transmission member.

6. The cell winding needle apparatus according to claim 5, **characterized in that**:
the drive shaft structure comprises a pin shaft and a roller, the pin shaft is mounted to the push rod body, the roller is rotatably mounted to an end portion of the pin shaft, and the roller is located in the second assembly hole.

7. The cell winding needle apparatus according to claim 5 or 6, **characterized in that**:
an inclination degree of the extension direction of the second assembly hole relative to the axial direction of the assembly housing is between 1:20 and 1:5.

8. The cell winding needle apparatus according to any one of claims 5 to 7, **characterized in that**:
an outer side wall of the assembly housing is provided with a plurality of guide grooves, the first assembly hole is opened at a groove bottom of the guide groove, and the transmission member is slidably mounted to the guide groove.

9. The cell winding needle apparatus according to claim 8, **characterized in that**:
each transmission member comprises a first section, a second section, and a third section that are sequentially connected, the first section and the third section are oppositely arranged, the first section and the third section are both provided with the second assembly hole, the first section and the third section are respectively located in two opposite guide grooves, and the second section is connected to the adsorption housing.

10. The cell winding needle apparatus according to any one of claims 5 to 9, **characterized in that**:
the transmission assembly further comprises a servo drive mechanism, the servo drive mechanism is mounted to the mounting base, and an output end of the servo drive mechanism is drivingly connected to one end of the push rod body close to the mounting base.

11. The cell winding needle apparatus according to any one of claims 1 to 10, **characterized in that**:
the cell winding needle apparatus comprises a plurality of sets of the transmission assemblies, and two adjacent sets of transmission assemblies are spaced apart.

12. The cell winding needle apparatus according to any one of claims 1 to 11, **characterized in that**:
the adsorption housing is provided with an air cavity, the adsorption housing has an arc surface side wall and end side walls connected to both ends of the arc surface side wall, the arc surface side wall is provided with a first air hole, the end side wall of the adsorption housing close to the mounting base is provided with a second air hole, and both the first air hole and the second air hole communicate with the air cavity.

13. The cell winding needle apparatus according to claim 12, **characterized in that**:
the cell winding needle apparatus further comprises a plurality of air path integration mechanisms, the plurality of air path integration mechanisms are in one-to-one correspondence with the plurality of adsorption housings, the air path integration mechanism is fixedly mounted to the end side wall of the adsorption housing close to the mounting base, the air path integration mechanism communicates with the air cavity, and the air path integration mechanism communicates with a vacuum pipeline.

14. The cell winding needle apparatus according to claim 12 or 13, **characterized in that**:
the arc surface side wall of each adsorption housing is provided with an avoidance groove, and both ends of the avoidance groove respectively penetrate through the two end side walls.

15. A cell winding device, **characterized by** comprising the cell winding needle apparatus according to any one of claims 1 to 14.

16. The cell winding device according to claim 15, **characterized in that**:
the cell winding device further comprises a slide rail, a bracket, and an unloading drive mechanism, the slide rail is mounted to a horizontal mounting surface, the bracket is slidably mounted to the slide rail, the unloading drive mechanism is mounted to the horizontal mounting surface, the unloading drive mechanism is drivingly connected to the bracket to drive the bracket to slide along the slide rail, and the mounting base is fixedly mounted to the bracket.
